# EUROPEAN PATENT APPLICATION

(11) **EP 2 701 281 A2**
(43) Date of publication of application: **26.02.2014**
(21) Application number: 13180363.7
(22) Date of filing: 14.08.2013
(51) Int. Cl.: H02J 11/00

(54) **Auxiliary power supply for high voltage applications**

(30) Priority: 24.08.2012 EP 12006055
(71) Applicant: ABB Technology AG, 8050 Zürich (CH)
(72) Inventor: Stengel, Gregor, 76227 Karlsruhe (DE); Breder, Henrik, 723 47 Västerås (SE); Skarby, Per, 5436 Würenlos (CH); Vittor, Timothy, Pennsylvania, 18045 (US)
(74) Representative: Kock, Ina

(57) **Abstract**

An auxiliary power supply system comprises an electric power source (4) at ground potential (G), a power supply circuit (5) at high voltage potential (19), and at least a first and a second insulating transmission link.

The first (2) and the second (3) insulating transmission links are based on differing energy transmission principles, with the first transmission link (2) making use of a contact-less transmission principle, and the second transmission link (4) being based on transmission of mechanical energy.

## Description

### Technical field

The present invention relates to the field of electrical power transmission, in particular to power auxiliary systems at high potential in HVDC applications (HVDC = high voltage DC).

### Related art

In high-voltage substations an increasingly broad range of auxiliary electrical devices mounted at high voltage potential need to be powered. For instance, such electrical devices are for switching, controlling and monitoring purposes which serve to further improve the reliability and/or performance of high-voltage power transmission systems.

One approach to supply power to auxiliary devices at high potential is to tap off the auxiliary power from the high-voltage circuit, for example by means of using transformers, as is described in US 8072192 B2. This, however, requires energization of the high-voltage circuit and measures for ensuring the proper operation of the auxiliary device and a waiting time until after energizing the device has settled to such an extent that the auxiliary power can be safely used. However, the energization process is often critical and an auxiliary power supply that is independent of the state of the high-voltage circuit is therefore highly desirable.

In other solutions, power is transmitted from ground to a high voltage potential, wherein the transmission means is configured to be electrically insulating.

For example, a capacitive coupling between a ground-potential installation and a high-potential installation, is disclosed in US 2006/0152109 A1.

Furthermore, it is known to convert the auxiliary power at ground potential to optical power, transmit the power to the high-potential regime via an optical link or through air and then convert the optical power back to electric power, as is for example described in GB 2177869 A, CN 101093943 A or DE 2631194 A. With this method, only very small amounts of power, typically in the order of fractions of Watts, can be transmitted.

From DE 3718869 A1 and US 3670175, a solution is known where a hydraulic pump installed at ground potential feeds a hydraulic motor at high potential which in turn mechanically drives an electric generator. The fluid is transported through an insulating pressure pipe.

Further, in US 3670175, it is suggested to transmit the energy from earth to high potential by means of an electric motor at earth level driving an electric generator at high potential through a rotating insulating rod. Such a system is mechanically complex, which may result in lower operating lifetimes.

Previously, auxiliary power was typically in the range of tens to hundreds of watts. Nowadays, the increasing need for additional control and monitoring units for further improving the reliability and performance of high voltage power transmission systems has led to an increasing requirement for a broader range of auxiliary powered devices mounted at high potential.

It is an object of the present invention to provide an auxiliary power supply equipment for providing auxiliary power to a high voltage installation, wherein electrical power can be transmitted from ground potential to a high-voltage potential independently of a state of energization of the high voltage installation and wherein said equipment is capable of handling amounts of power sufficient for the operation of auxiliary devices at the high voltage installation, such as switching elements, e. g. circuit breakers and disconnectors, controlling and monitoring units as well as for example installations with series capacitors or a Thomson coil.

### Summary of the present invention

This object has been achieved by the auxiliary power supply system according to claim 1.

Further embodiments are indicated in the depending subclaims.

The inventors have recognized that, in the past, a single power transfer solution could be considered optimal for a specific high voltage installation. However, due to the increasingly expanding power transfer range, new technologies or architectures would be needed in order to meet the extended requirements.

According to an aspect, an auxiliary power supply system for supplying electrical energy from a ground potential to a high voltage installation is provided, comprising an electric power source at ground potential, a power supply circuit at high voltage potential and at least a first and a second power transmission link, where the power transmission links do not transport any electrons and are therefore both electrically insulating. In the following, the power transmission links may also be called insulating transmission links. The high voltage installation may be operated either with alternating current (AC) or direct current (DC).

According to the invention, the first and the second insulating transmission links are based on differing energy transmission principles. Differences in the energy transmission principle may for example be based on the type of energy which is transmitted, e.g. electromagnetic waves, mechanical energy or light; and/or on the medium across which the energy is transmitted from the sending to the receiving side, e.g. across a solid connection or through a liquid or through a gas or vacuum. According to the invention, it is specified that the first transmission link makes use of a contact-less transmission principle, and that the second transmission link is based on transmission of mechanical energy.

Accordingly, it is proposed that a hybrid technology concept for power transfer is utilized, as the combination of different power transfer methods allows for a more optimal power transfer to be realized over a broader power transfer range. In such a hybrid solution, two or more technologies to transfer power to the high-voltage potential allow for each of the power transfer mechanisms to take over the operation of the respective other system when a failure occurs.

The first transmission link is supposed to be contact-less, in the meaning that no mechanical energy is transmitted and therefore no mechanical forces are applied to any transmitting elements. This means in other words, that the transmission principle of the first transmission link is non-mechanical, using a gas or vacuum and in particular air between the ground potential and the high voltage potential as transmission medium. The transmitted energy may for example have the form of electromagnetic waves, in particular a purely electrical or a purely magnetic field, or it may be light energy.

The second transmission link transmits mechanical energy, in the meaning that kinetic and/or potential energy are transmitted by applying mechanical forces to solid and/or liquid transmission elements which are arranged between the ground and high voltage potentials. For this type of transmission, a physical contact between transmission elements arranged at ground potential and transmission elements arranged at high voltage potential is required. As a result of the applied mechanical forces, solid transmission elements may be set into motion or a liquid transmission element may be compressed or decompressed.

The combination of a contact-less, non-mechanical transmission principle with a mechanical transmission principle has the advantage that shortcomings of one principle are overcome by strong points of the other.

In particular, a strong point of the contact-less energy transmission is its robustness and long operating life due to a limited or no number of moving transmission elements. A shortcoming, on the other hand, may be the comparatively high costs, which would be incurred especially if the non-mechanical energy transmission is applied to high voltage installations which require a high amount of energy during a short period of time, such as a high voltage breaker or disconnector needing a high amount of power for executing a switching operation.

Opposed to that, mechanical energy transmission allows for the transmission of high amounts of power at reasonable costs, but the involved transmission elements last for a shorter lifetime only.

Due to the combination of the non-mechanical with the contact-less transmission link with the mechanical transmission link, it becomes possible to provide a high amount of energy to the high voltage potential during recurring short periods of time and to continuously provide a low or medium amount of energy, both at reasonable costs. This is particularly useful for the operation of high voltage breakers and disconnectors which from time to time require a high amount of actuation or switching energy and in the meantime require only a low energy level for supplying their electronic monitoring and control equipment, for example.

In a preferred embodiment, the first transmission link comprises at least one coupling capacitor for transmitting energy via an electrical field or at least two inductively coupled coils for transmitting energy via a magnetic field.

In case of the at least one coupling capacitor, the first transmission unit further comprises a high frequency AC generator at the ground potential, the output of which is connected to the at least one coupling capacitor. The at least one coupling capacitor is preferably a low power capacitor, in particular a series connection of several coupling capacitors. The electrical energy provided by the high frequency AC generator is transmitted by the at least one coupling capacitor from the ground potential to the high voltage potential while any possible DC components are not transmitted. In order to adjust the voltage potential on the input or the output side of the at least one coupling capacitor, a transformer may be provided between the high frequency AC generator and the input side of the at least one coupling capacitor or between the high voltage output side of the at least one coupling capacitor and the high voltage installation.

In case that the first transmission link comprises at least two inductively coupled coils, it may further comprise an exciter at the ground potential for providing magnetic energy to the inductively coupled coils and a rectifier for transforming the magnetic energy into electric power at the high voltage potential.

The second transmission link may be realized based on different transmission media and by using different mechanical transmission elements. According to one aspect, the second transmission link may comprise an electric motor at the ground potential, an electric generator at the high voltage potential and an insulating shaft for mechanically coupling the motor and the generator.

In addition to these transmission elements, the second transmission link may further comprise at least one flexible coupling which may be arranged between motor and shaft and/or between shaft and generator, with the purpose to imbalance mechanical deflections and oscillations and to allow for easier assembly.

According to another aspect, the second transmission link may comprise a hydraulic pump at the ground potential, a turbine coupled to an electric generator at the high voltage potential and a fluid flowing in insulating pipes between the pump and the turbine.

The fluid may be a cooling liquid of the high voltage installation. Accordingly, if the high voltage installation already contains a cooling system this could be expanded to allow for energy transmission from ground to high potential with little additional effort.

The auxiliary power supply system containing the above described first and second transmission links may be used not only to directly provide the electrical energy directly to the high voltage installation, but also to supply the electrical energy for charging an energy storage unit belonging to the high voltage installation. The energy storage unit may contain batteries and/or capacitors.

Additionally, the auxiliary power supply system may further comprise means for electrically isolating the auxiliary power supply system when no charging of the energy storage unit is required.

According to a particular aspect of the invention, the high voltage installation may comprise an actuating unit, particularly a switching unit, e.g. a breaker or disconnector, requiring short time actuation power; and auxiliary electronics for operating the actuating unit. In this case, the first transmission link may be arranged to continuously supply power to the auxiliary electronics, and the second transmission link may be arranged to provide the short time actuation power to the actuating unit.

The auxiliary power supply system may even further contain a control unit which is configured to control the first and the second insulating transmission link and to decouple a respective one of the transmission links from the power supply circuit in case of failure.

For safety reasons, the auxiliary power supply system may not only be arranged with above described control unit for individually preventing one of the transmission links from delivering energy to the high voltage installation directly or via the energy storage unit, but may additionally or alternatively comprise a disconnector for decoupling the whole auxiliary power supply system from the high voltage installation.

### Brief description of the drawinas

Preferred embodiments of the present invention are described in more detail in conjunction with the accompanying drawings, in which:
- Figure 1: shows a schematic illustration of an auxiliary power supply system for a high voltage installation based on a hybrid concept;
- Figure 2: schematically shows a first embodiment of the auxiliary power supply system using series-connected capacitors in a first transmission link and a motor-shaft-generator arrangement in a second transmission link;
- Figure 3: schematically shows the second transmission link of the first embodiment in detail;
- Figure 4: schematically shows a second transmission link of a second embodiment of the auxiliary power supply system which is based on a pump turbine arrangement ; and
- Figure 5: schematically shows a first transmission link of a third embodiment of the auxiliary power supply system which is based on an arrangement for inductive coupling for wireless power transfer.

### Detailed description of embodiments

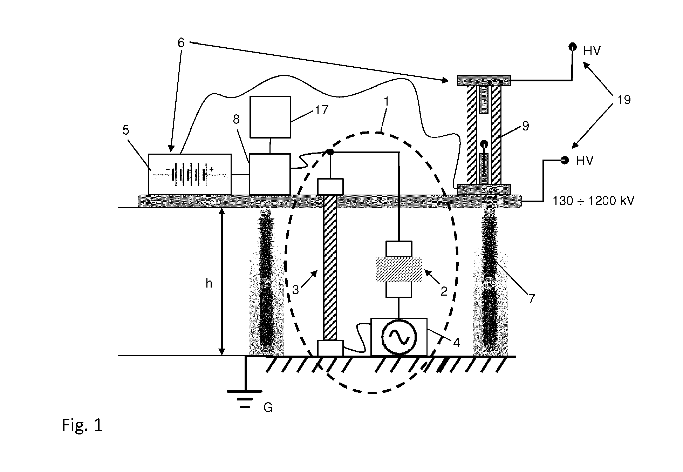

Figure 1 schematically shows an auxiliary power supply system 1 for transferring electrical energy from a ground potential G to a high voltage potential HV, the auxiliary power supply system 1 comprising a first insulating transmission link 2 and a second insulating transmission link 3. High voltage in this context is considered to be a voltage typically in the range between 130 kV and 1200 kV.

An electric power source 4 is provided which supplies DC or AC electric power to both the first and the second transmission links.

The first and the second insulating transmission links are based on differing energy transmission principles. The first transmission link 3 makes use of a contact-less transmission principle, which is indicated by a shaded area through which the energy is transmitted in a contact-less way. The second transmission link 3 is based on transmission of mechanical energy, indicated by the rectangular element directly connecting the ground potential side with the high voltage potential side.

The high voltage potential sides of the first and second transmission links 2, 3 are both electrically coupled to a power supply circuit 5, so that both can supply electrical energy to a high voltage installation 6, which in the example of Fig. 1 is a high voltage switching device 9 supplied via an energy storage unit 8. The high voltage switching device 9 is further electrically connected to at least one high-voltage line 19, so that it is in contact with high voltage (in relation to ground potential).

Additionally, a control unit 17 is provided at high voltage potential which is configured to control the first and the second insulating transmission links 2 and 3, and to decouple a respective one of the transmission links 2, 3 from the power supply circuit 8 in case of failure of the respective one of the transmission links.

All elements at high voltage potential, namely the high voltage installation 6, the power supply circuit 8, the control unit 17 and those transmission elements of the first and second transmission links which belong to their respective high voltage side, are arranged on a raised platform at a height h above ground. The platform is insulated from ground potential G via high voltage insulators 7.

When connected to and powered via the first and second transmission links 2, 3, respectively, the power supply circuit 8 receives auxiliary power, which in this context is considered to be a power typically in the range of several to thousands of Watts.

In general high-voltage installations in high-voltage power transmission systems may comprise devices that are located close to or in galvanic contact with a high-voltage conductor. Examples of such apparatuses are switching elements, series capacitors, sensors for voltage and current as well as monitoring and protective equipment. These devices require the auxiliary power for their operation.

For supplying the high voltage installation 6 with electric energy, both of the first and the second transmission links 2, 3 are operated to provide electric current to the power supply circuit 8 which in turn provides it to the energy storage unit 5. The energy storage unit 5 may store the energy temporarily, as in case of a capacitor arrangement, or more permanently, as in case of batteries. According to the present invention, both transmission links 2, 3 independently transmit electric power to the high-voltage installation 6 based on different energy conversion and transmission mechanisms. In the following, concepts of transferring electric energy to the high-voltage installation 6, which can be used for the first and second transmission links, are described in more detail.

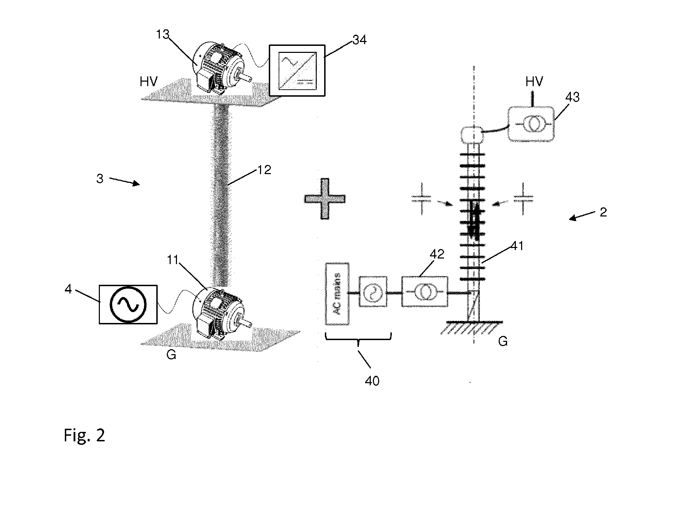

Figure 2 schematically shows a first embodiment of the auxiliary power supply system of Fig. 1 using series-connected capacitors in a first transmission link 2 and a motor-shaft-generator arrangement in a second transmission link 3.

The first transmission link 2 comprises multiple coupling capacitors 41 which are connected in series and are provided with electrical energy by a high frequency AC generator 40 at the ground potential G. Between the high frequency AC generator 40 and the ground potential side of the coupling capacitors 41, a transformer 42 is provided for adapting the AC voltage level as required. Another transformer 43 is provided at high voltage potential between the high voltage side of the coupling capacitors 41 and the output HV which is connected to the power supply circuit 8 of Fig. 1.

The second transmission link 3 comprises an electric motor 11 at the ground potential G, an electric generator 13 at the high voltage potential HV and an insulating shaft 12 for mechanically coupling the motor and the generator. The electric motor 11 is supplied by electric power source 4. Accordingly, each of the two transmission links 2, 3 has its own power supply, opposed to the arrangement of Fig. 1.

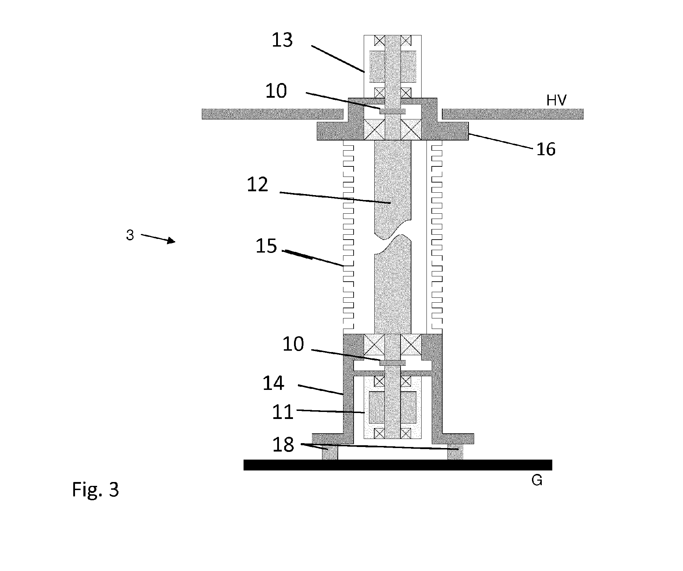

Figure 3 schematically shows the second transmission link 3 of the first embodiment in detail, in which the power is transferred by mechanical rotation energy. As already described, the second transmission link 3 of Figs. 2 and 3 comprises the electric motor 11 which is coupled directly or via an optional transmission gear to a non-conductive insulating shaft 12 that extends between the electric motor 11 at ground potential G and the electric generator 13 at high voltage potential HV. The electric motor 11 is housed in a ground-potential housing 14 which is placed on top of support mounts 18. The insulating shaft 12 may be entirely made of a non-conductive material or can include a portion between the ground potential G and the high voltage potential HV which is non-conductive, as long as there is an insulation between G and HV which is sufficient for the voltage potential difference.

At the high voltage potential HV, the insulating shaft 12 is coupled directly or via a further optional transmission gear to the electric generator 13.The second transmission link 3 transfers mechanical energy by rotation of the insulating shaft 12 and convertsit to electric power at the high voltage level. The ground-potential housing 14 of the electric motor 11 supports a bushing 15 that is cylindrical and surrounds the insulating shaft 12. The bushing 15 extends up to a high-voltage support element 16 which is located at the high-voltage potential HV.

The electric motor 11 and the electric generator 13 are both mechanically connected to the insulating shaft 12 via a flexible coupling, which have the purpose to imbalance mechanical deflections and oscillations and to allow for easier assembly of the second transmission link 3.

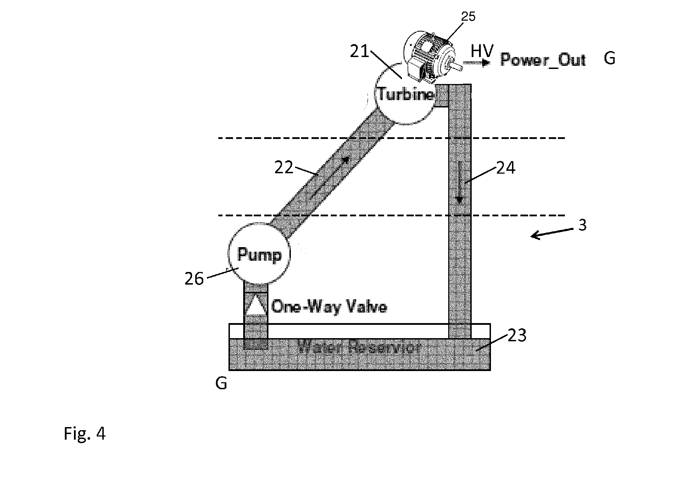

Figure 4 shows a second transmission link of a second embodiment of the auxiliary power supply system which is based on a pump turbine arrangement. In the second transmission link of Fig. 4 a cooling system of the high voltage installation 6 is used that is already in place and is easily expanded to allow for energy to be drawn at the high voltage potential HV. As shown, mechanical energy transmitted by the cooling liquid via a supply tube 22 can be recovered at the high voltage potential HV by a turbine 21 and generator 25 which convert pressure and speed of the cooling liquid into electric power. Through a reflux pipe 24, the cooling liquid leaving the turbine 21 flows back from the high voltage potential HV to the ground potential G, and there into a liquid reservoir 23 from which the cooling liquid is pumped by a hydraulic pump 26 through the supply pipe 22 to the turbine 21.

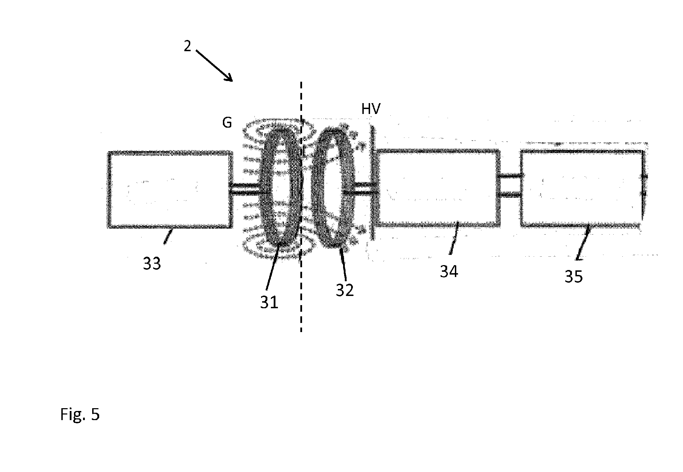

Figure 5 shows a first transmission link of a third embodiment of the auxiliary power supply system, which first transmission link utilizes an induction coupling for wireless power transfer through an insulating medium, such as air. The concept consists in the usage of inductive coupling between coils to transfer power over a distance. As shown in Figure 5, there is provided a ground-potential coil 31 at the ground potential G and a high-voltage coil 32 at the high voltage potential HV. The ground-potential coil 31 and the high-voltage coil 32 are coupled via an insulating gap, e.g. Rogowski shields of specifically semi-type materials, concerning magnetic and electrical susceptibility with designed anisotropy.

The ground-potential coil 31 is coupled with an exciter 33 which provides an electric oscillation to supply the ground-potential coil 31 with electric power. The high-voltage coil 32 receives the electric power and, after a rectification in a rectifier 34 and a voltage regulation in a regulator 35, a DC power is available to supply a high voltage installation 6 at high-voltage level.

Further alternatives for a first transmission link for transferring energy without galvanic coupling between ground potential and high voltage potential may for example use microwave power transfer and optical power transfer, which allow for the transmission of energy through air without the provision of connecting elements.

Furthermore, the power transfer concept used in the hybrid solution described above allows for communication and/or control signals to be transmitted in parallel or in combination with the power transfer, i.e. by means of an optical link or by using the signals of electrical unit of the first or second transmission links, which might enable condition monitoring.

Moreover, integrated and withdrawable disconnectors may be included in the first and second transmission links, respectively, which enable the replacement of one of the transmission links without interrupting the operation of the other transmission links to that the high voltage installation is continuously provided with auxiliary power.

### Reference list

- 1: auxiliary power supply system
- 2: first transmission link
- 3: second transmission link
- 4: electric power source
- 5: power supply circuit
- 6: high voltage installation
- 7: high voltage insulator
- 8: energy storage unit
- 9: high voltage switching device
- 10: flexible coupling
- 11: electric motor
- 12: insulating shaft
- 13: electric generator
- 14: ground-potential housing
- 15: bushing
- 16: high-voltage support element
- 17: control unit
- 18: support mounts
- 19: high-voltage line
- 21: turbine
- 22: supply pipe
- 23: liquid reservoir
- 24: reflux pipe
- 25: generator
- 26: hydraulic pump
- 31: primary ground-potential coil
- 32: secondary high-voltage coil
- 33: exciter
- 34: rectifier
- 35: regulator
- 40: high frequency AC generator
- 41: coupling capacitors
- 42: transformer at ground potential
- 43: transformer at high voltage potential

## Claims

1. Auxiliary power supply system (1) for supplying electrical energy to a high voltage installation (6), comprising
• an electric power source (4) at ground potential (G),
• a power supply circuit (5) at high voltage potential (19), and
• at least a first and a second insulating transmission link,
**characterized in that**
• the first (2) and the second (3) insulating transmission links are based on differing energy transmission principles, with
• the first transmission link (2) making use of a contact-less transmission principle, and
• the second transmission link (4) being based on transmission of mechanical energy.

2. Auxiliary power supply system according to claim 1, wherein the first transmission link comprises at least one coupling capacitor or at least two inductively coupled coils (31, 32).

3. Auxiliary power supply system according to claim 2, wherein in case of the at least one coupling capacitor, the first transmission link (2) further comprises a high frequency AC generator (4b) at the ground potential (G).

4. Auxiliary power supply system according to claim 2, wherein in case of the at least two inductively coupled coils, the first transmission link (2) further comprises an exciter (33) at the ground potential for providing magnetic energy to the inductively coupled coils (31, 32), and a rectifier (34) for transforming the magnetic energy into electric power at the high voltage potential.

5. Auxiliary power supply system according to any of claims 1 to 4, wherein the second transmission link (3) comprises an electric motor (11) at the ground potential, an electric generator (13) at the high voltage potential and an insulating shaft (12) for mechanically coupling the motor and the generator.

6. Auxiliary power supply system according to claim 3, wherein a flexible coupling (10) is arranged at least between motor (11) and shaft (12) or between shaft (12) and generator (13).

7. Auxiliary power supply system according to any of claims 1 to 4, wherein the second transmission link comprises a hydraulic pump (26) at the ground potential, a turbine (21) coupled to an electric generator (18) at the high voltage potential and a fluid flowing in insulating pipes (22, 24) between the pump and the turbine.

8. Auxiliary power supply system according to claim 7, wherein the fluid is a cooling liquid of the high voltage installation (6).

9. Auxiliary power supply system according to one of the previous claims, wherein both the first (2) and the second (3) transmission link are arranged to supply the electrical energy for charging an energy storage unit (8) of the high voltage installation.

10. Auxiliary power supply system according to claim 9, further comprising means for electrically isolating the auxiliary power supply system when no charging of the energy storage unit is required.

11. Auxiliary power supply system according to one of the previous claims, wherein
• the high voltage installation (6) comprises an actuating unit requiring short time actuation power, and auxiliary electronics for operating the actuating unit,
• the first transmission link (2) is arranged to continuously supply power to the auxiliary electronics, and
• the second transmission link (3) is arranged to provide the short time actuation power to the actuating unit.

12. Auxiliary power supply system according to one of the previous claims, wherein a control unit (17) is configured to control the first and the second insulating transmission link and to decouple a respective one of the transmission links from the power supply circuit (8) in case of failure.

13. Auxiliary power supply system according to one of the previous claims, further comprising a disconnector for decoupling the auxiliary power supply system from the high voltage installation (6).
